# EUROPÄISCHE PATENTSCHRIFT

(11) **EP 0 756 669 B1**
(45) Veröffentlichungstag und Bekanntmachung des Hinweises auf die Patenterteilung: **07.01.1998**
(21) Anmeldenummer: 95914336.3
(22) Anmeldetag: 31.03.1995
(51) Int. Cl.: F02M 69/46, F02M 61/14, F16L 41/08

(54) **DICHTUNGSANORDNUNG FÜR EINSPRITZVENTILE AN KRAFTSTOFFZULEITUNGEN**
SEALING ARRANGEMENT FOR INJECTION VALVES ON FUEL FEED LINES
SYSTEME D'ETANCHEITE POUR SOUPAPES D'INJECTION DE CONDUITES D'ALIMENTATION EN CARBURANT

(30) Priorität: 21.04.1994 DE 4413863
(43) Veröffentlichungstag der Anmeldung: 05.02.1997
(73) Patentinhaber: Achenbach, Manfred, 74321 Bietigheim-Bissingen (DE); Krumeich, Peter, 88709 Meersburg (DE); Streit, Gerhard, 74223 Flein (DE)
(72) Erfinder: Achenbach, Manfred, 74321 Bietigheim-Bissingen (DE); Krumeich, Peter, 88709 Meersburg (DE); Streit, Gerhard, 74223 Flein (DE)
(74) Vertreter: Wolff, Michael, Dipl.-Phys.
(86) Internationale Anmeldenummer: EP9501212
(87) Internationale Veröffentlichungsnummer: WO9529336

(56) Entgegenhaltungen:
- WO-A-91/11610
- DE-A- 3 304 567
- GB-A- 2 024 323
- US-A- 3 941 109
- KGK KAUTSCHUK GUMMI KUNSTSTOFFE, INTERNATIONALE FACHZEITSCHRIFT FÜR POLYMERE WERKSTOFFE, 46. JAHRGANG, Bd. 10, Oktober 1993 Seiten 812-823, G. STREIT ET AL 'Funktionalität von Elastomerdichtungen bei tiefen Temperaturen am Beispiel von O-Ringen. Teil 2:Einfluss von Kraftstoffen auf die Dichtkraft bei Tiefen Temperaturen' in der Anmeldung erwähnt

## Beschreibung

Die Erfindung betrifft eine Dichtungsanordnung gemäß Oberbegriff des Anspruches 1.
Bei den bekannten Dichtungsanordnungen dieser Art, mit einem O-Ring als Dichlungselement, sitzt dieses in einer radial äußeren Nut des Ventilgehäuses, dessen mit der Kraftstoffzuleitung zu verbindendes Ende durch einen nutbegrenzenden Flansch gebildet ist, der an einer Ringfläche anschlägt, die sich am Grund der kreiszylindrischen Leitungsabzweigung zur Aufnahme des Ventilgehäuses befindet und die Durchbohrung der Leitung an der Abzweigstelle säumt; siehe Fig. 8.

Nachteilig ist an einer solchen Dichtungsanordnung, daß die für den Kälteeinsatz verwendeten Dichtungselemente besondere Materialeigenschaften aufweisen müssen, um tauglich zu sein, und dennoch bei tiefen Temperaturen von unter minus 40° Celsius versagen, wenn die Quellung des O-Ringes durch den Kraftstoff nicht mehr ausreicht, um zu verhindern, daß das Dichtungselement radial außen eine Leckage bewirkt; vgl. G. Streit und M. Achenbach: "Funktionalität von Elastomerdichtungen bei tiefen Temperaturen am Beispiel von O-Ringen, Teil 2: Einfluß von Kraftstoffen auf die Dichtkraft bei tiefen Temperaturen" in "Kautschuk, Gummi, Kunststoffe KGK, Internationale Fachzeitschrift für polymere Werkstoffe", 10/93 (Oktober 1993, 46. Jahrgang), Seite 812 ff. Daher liegt der Erfindung die Aufgabe zugrunde, eine Dichtungsanordnung der eingangs genannten Art zu schaffen, welche auch bei unter minus 40° Celsius und unzureichender oder ausbleibender (zum Beispiel bei Betriebspausen) Quellung des Dichtungselementes (O-Ring) für eine sichere Abdichtung der Steckverbindung des Einspritzventiles und der zugeordneten Abzweigung der Kraftstoffzuleitung sorgt.
Diese Aufgabe ist erfindungsgemäß im wesentlichen durch die kennzeichnenden Merkmale des Anspruches 1 gelöst.
Vorteilhaft ist an dieser Aufgabenlösung, daß als Dichtungselement gewöhnliche Dichtringe ohne besondere Eigenschaften bei tiefen Temperaturen verwendet werden können und die Dichtheit auch dann noch gewährleistet ist, wenn infolgedessen oder wegen zeitweiligen Ausbleibens der Kraftstoffzufuhr eine Quellung die kältebedingte Schrumpfung des Dichtungselementes nicht mehr zu kompensieren vermag.
Die Erfindung beruht auf der Erkenntnis, daß ein nicht an der Wandung des Einbauraumes befestigtes Dichtungselement radial nach innen auf seinen Träger schrumpft und dabei die radial innere Dichtwirkung verstärkt, während die radial äußere Dichtwirkung verringert wird.

Die erfindungsgemäße Dichtungsanordnung kann durch die kennzeichnenden Merkmale der Unteransprüche ausgestaltet werden, womit die Ausgestaltungsmöglichkeiten aber nicht erschöpft sind.
Die vorgeschlagene formschlüssige Verbindung des erfindungsgemäßen Dichtungselementes mit der zugeordneten Abzweigung der Kraftstoffzuleitung bewirkt den Halt des Dichtungselementes an der Zuleitungsabzweigung vor dem Einstecken und Sichern des Einspritzventiles.
Bei der Ausgestaltung gemäß Anspruch 8 sorgt das klammerartige Dichtungselement für eine Sicherung des Zusammenhalts des Einspritzventiles und der Leitungsabzweigung, wobei der Flanschadapter beteiligt ist, der einstückig mit der Kraftstoffzuleitung ausgebildet sein könnte.

Die WO 91/11610 offenbart sowohl eine gattungsgemäße Dichtungsanordnung nach dem Oberbegriff des Anspruches 1 an dem der Kraftstoffzuleitung (18) benachbarten Ende (14) des Einspritzventils (10) - eine Anordnung, die nicht ganz den eingangs beschriebenen bekannten Dichtungsanordnungen entspricht, weil kein Flansch des Ventilgehäuses an der Anzweigung (16) der Zuleitung (18) anschlägt, sondern das kolbenartig ausgebildete Ventilende (14) "teleskopisch" in die Abzweigung (16) eingreift - als auch eine gattungsähnliche Dichtungsanordnung an dem einem Verteiler (22) benachbarten Ende (12) des Ventils (10), wo im Anschluß an einen Außenbund (32) des Ventilgehäuses, welcher den bekannten Flansch zur axialen Begrenzung der Ringnut (26) zur Aufnahme des Dichtungselementes (34) ersetzt, eine Fortsetzung des Nutgrundes als äußeres Ende des Ventilgehäuses berührungsfrei in eine Bohrung (20) des Verteilers 822) vorgreift, während das im wesentlichen L-förmige Dichtungselement (34), das axial länger als radial dick ist und mit seinem dickeren Abschnitt in der Ringnut (26) gelagert ist, zwar den ringförmigen Umfang des Bundes (32), nicht jedoch jenes äußereste Gehäuseende berührt. Dafür legt sich unter dem Druck in der Zuleitung (18) die axial vordere kreisringförmige Stirnfläche des Dichtungselementes (34) an eine Schulter (38), die von der Verteilerbohrung (20) und einer weiteren Sackbohrung (36) im Verteiler (22) gebildet ist, während die radia! äußere Umfangsfläche (42) des Dichtungselementes (34) die Wandung der Sackbohrung (36) berührt, solange keine tiefen Temperaturen herrschen. Ist das aber der Fall, dann endet diese Berührung und das Dichtungselement (34) schrumpft radial innen auf das Ventilende (12) auf, wobei es nicht den Bund (32) übergreifen und sich nicht an das äußerste Gehäuseende dichtend anlegen kann.
Im Gegensatz zur erfindungsgemäßen Dichtungsanordnung findet also am verteilernahen Gehäuseende (12) nicht wie am Zuleitungsnahen Gehäuseende (14) eine radiale, sondern eine axiale Abdichtung statt, die bei radialer Schrumpfung des Dichtungselementes (34) noch dichten kann, aber durch den Wegfall der Dichtstrecke entlang der Außenmentelfläche (42) des Dichtungselementes einem erhöhten Druckgradienten ausgesetzt ist, wenn die Zuleitung (18) überhaupt unter Druck steht.

Im Folgenden ist die Erfindung anhand mehrerer durch die Zeichnung beispielhaft dargestellter Ausführungsformen der erfindungsgemäßen Dichtungsanordnung im einzelnen erläutert. Es zeigt:
- Fig. 1: Einen mit Fig. 8 vergleichbaren,abgebrochen zur Hälfte dargestellten zentralen Längsschnitt durch eine prinzipielle 1. Ausführungsform bei der mit einem Einspritzventil bestückten Abzweigung einer Kraftstoffzuleitung
- Fig. 2 und 3: Je eine Fig. 1 entsprechende, aber ganz dargestellte Schnittansicht einer 2. bzw. 3. Ausführungsform
- Fig. 4: Einen abgebrochen dargestellten zentralen Längsschnitt durch eine 4. Ausführungsform bei der Abzweigung einer Kraftstoffzuleitung, deren Wandung an der Abzweigstelle das Einspritzventil aufnimmt
- Fig. 5: Eine den Fig. 2 und 3 entsprechende Schnittansicht einer 5. Ausführungsform in Explosionsdarstellung bei der Abzweigung einer Kraftstoffzuleitung in ein nicht dargestelltes Einspritzventil
sowie
- Fig. 6 und 7: Der Fig. 5 entsprechende Schnittansichten einer 6. bzw. 7. Ausführungsform in Explosionsdarstellunggleichen Umfangs.

Gleiche oder einander entsprechende Gebilde (Teile, Flächen, Räume) verschiedener Ausführungsformen sind mit Bezugszahlen bezeichnet, die sich um das Ein- oder Mehrfache von 100 unterscheiden und durch ihre Hunderterziffern die Nummer der Ausführungsform widergeben. Die Bezugszahlen unter 100 gelten für Fig. 8 (Stand der Technik).

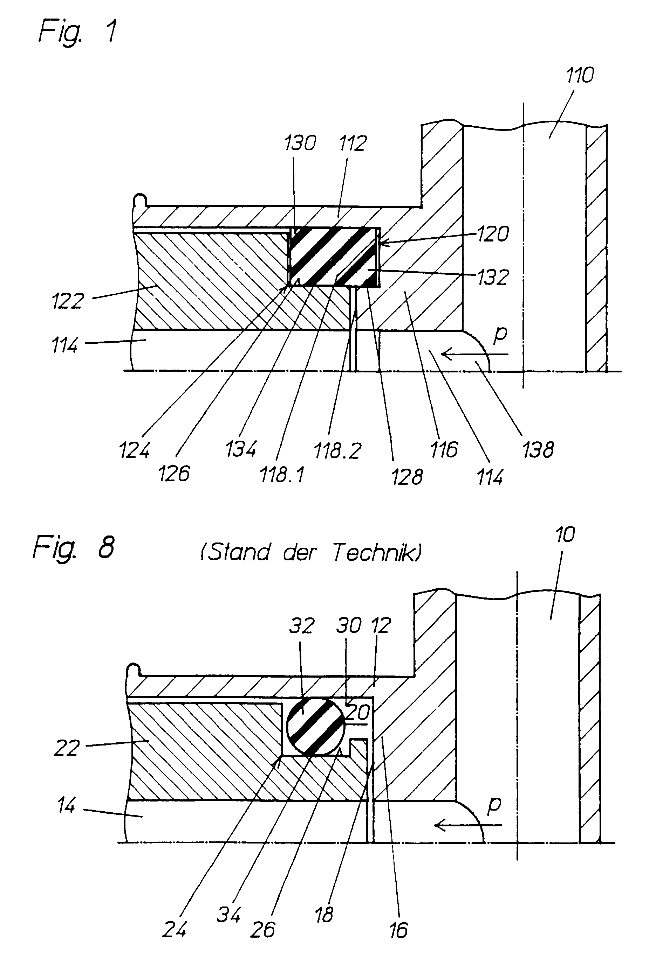

Gemäß Fig. 1 ist an eine kreiszylindrische Kraftstoffzuleitung 110, nämlich eine Verteilerleitung für mehrere Einspritzventile, senkrecht eine kreiszylindrische Abzweigung 112 angeformt,die eine mit dem Hohlraum der Zuleitung 110 in Verbindung stehende zentrale Bohrung 114 und einen an die Wandung der Zuleitung 110 angeformten massiven Sockel 116 aufweist, der die Bohrung 114 mit einer radial nach innen rechtwinklig hochgestuften ringförmigen Grundfläche 118 säumt, deren radial äußerer Teil 118.1 einen Einbauraum 120 bohrungsaxial gegen die Zuleitung 110 begrenzt, und deren radial innerer Teil 118.2 der radialen Stirnfläche des Ventilgehäuses 122 eines Einspritzventils gegenübersteht. Das in Fig. 1 gezeigte zuleitungsnahe Ende des Ventilgehäuses 122 ist kreiszylindrisch geformt und steckt in der Abzweigung 112, wobei es mit einer ringförmigen,radial äußeren,rechtwinklig profilierten Eckaussparung 124 den Einbauraum 120 axial gegen das Einspritzventil und radial nach innen mit einer radial äußeren Ringfläche 126 begrenzt, die axial hinter dem Spalt zwischen Sockel 116 und Ventilgehäuse 122 durch eine zusätzliche radial äußere Ringfläche 128 gleichen Durchmessers fortgesetzt wird, welche die Grundflächenteile 118.1 und 118.2 miteinander verbindet.
Der Einbauraum 120, der radial nach außen durch die Wandung der Abzweigung 112 mit kreiszylindrischer Ringfläche 130 koaxial zu den Ringflächen 126 und 128 begrenzt ist, nimmt ein rechteckig profiliertes elastomeres Dichtungselement 132 auf, das im Gegensatz zu der metallischen Zuleitung 110 mit Abzweigung 112 und dem metallischen Ventilgehäuse 122 zum Beispiel aus kraftstoffbeständigem Gummi besteht.
Dabei wurde der Raumfüllungsgrad so gewählt, daß das Dichtungselement 132 bei Montagetemperatur mit radialer Vorspannung auf den Ringflächen 126 und 128 sowie an der Innenfläche 130 anliegt. Sinkt die Betriebstemperatur unter die Montagetemperatur und kann die Quellung des Dichtungselementes unter Kraftstoffeinwirkung dessen durch Schrumpfung verminderte radial äußere Vorspannung nicht mehr aufrechterhalten, dann hebt das Dichtungselement 132 zwar von der Ringfläche 130 ab; gleichzeitig schrumpft das Dichtungselement 132 aber auf die Ringfläche 128 ebenso wie auf die Pingfläche 126 auf, wodurch der Spalt zwischen Sockel 116 und Ventilgehäuse 122 in beiden axialen Richtungen vollkommen sicher abgedichtet wird, weil das Dichtungselement 132 eine axial ausgedehnte, radial innere Dichtfläche 134 aufweist, die auf die zusätzliche, radial äußere Ringfläche 128 des Sockels übergreift und auf dieser den Einbauraum radial innen mitbegrenzenden Ringfläche 128 dichtend sitzt.

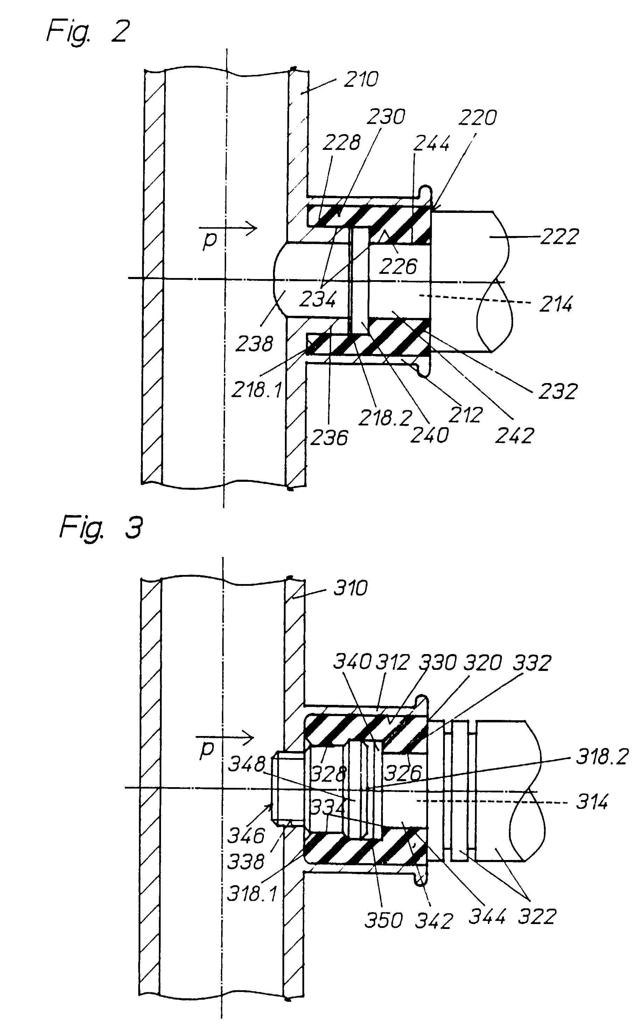

Gemäß Fig. 2 ist an eine kreiszylindrische Zuleitung 210 senkrecht eine kreiszylindrische Abzweigung 212 angeformt, in der ein kreiszylindrischer koaxialer Innenstutzen 236 liegt, der an die Berandung der radialen Bohrung 238 der Zuleitung 210 an der Abzweigungsstelle angeformt ist. An der innerhalb der Abzweigung 212 axial vertieft liegenden freien Stirnfläche des Innenstutzens 236 liegt ein kreisscheibenförmiger Flansch 240 bündig an, der mit einem bis an die Abzweigung 212 heranreichenden Ventilgehäuse 222 und einem verbindenden kreiszylindrischen Zapfen 242 eine rechteckig profilierte Ringnut 244 bildet, in die ein manschettenartiges L-förmiges Dichtungselement 232 eingreift, das den gesamten Einbauraum 220 axial zwischen der Zuleitung 210 einerseits und dem Ventilgehäuse 222 andererseits sowie radial zwischen der Abzweigung 212 einerseits und dem Grund der Ringnut 244, der Umfangsfläche des Flansches 240 und der Außenfläche 228 des Innenstutzens 236 andererseits ausfüllt, wobei der Durchmesser des Zapfens 242 kleiner ist als der Außendurchmesser des Innenstutzens 236 und der gleich große Durchmesser des Flansches 240. Die Durchmesser des Zapfens 242 bzw. der Bohrung 238 sind im Ausführungsbeispiel zufällig gleich.
Die radiale Außenfläche 228 des Innenstutzens 236 bildet also hier die zusätzliche Ringfläche für den übergriff des Dichtungselementes 232.

Gemäß Fig. 3 fehlt bei einer Zuleitung 310 mit Abzweigung 312 deren Innenstutzen 236. Dafür ist in eine radiale Bohrung 338 der Zuleitung 310 längs der Zylinderachse der Abzweigung 312 ein koaxialer Adapter 346 gesteckt, der zur fluidleitenden Verbindung der Zuleitung mit,einem Einspritzventil axial durchbohrt ist und innerhalb der Abzweigung 312 an seinem freien Ende einen trapezförmig profilierten, ringförmigen Flansch 348 sowie axial daneben eine radial äußere kreiszylindrische Ringfläche 328 aufweist. Nahe bei dem Flansch 348 befindet sich ein kreisscheibenförmiger Flansch 340, der mit einem Ventilgehäuse 322 des Einspritzventiles mittels eines kreiszylindrischen Zapfens 242 verbunden ist, dessen zylindrische Außenfläche 326 den Grund einer rechtwinklig profilierten Ringnut 344 bildet.
Den Einbauraum zwischen der Abzweigung 312 radial außen und dem Adapter 346 sowie dem Zapfen 342 radial innen und axial zwischen der Wandung der Zuleitung 310 einerseits sowie dem Ventilgehäuse 322 andererseits ist ausgefüllt durch ein Dichtungselement 332, das radial innen eine mittlere Ringnut 350 zur Aufnahme der beiden Flansche 340 und 348 aufweist; die Flanken der Ringnut verklammern die beiden Flansche. Die radial innere Dichtfläche 334 ist also gestuft und liegt dichtend sowohl an der Ringfläche 326 des Zapfens 342 als auch an der zusätzlichen Ringfläche 328 des Adapters 346 an. Dabei ist der Durchmesser des Zapfens 342 etwas kleiner als der Durchmesser der Adapter-Ringfläche 328, während die Durchmesser der beiden Flansche 340 und 348 gleich sind.

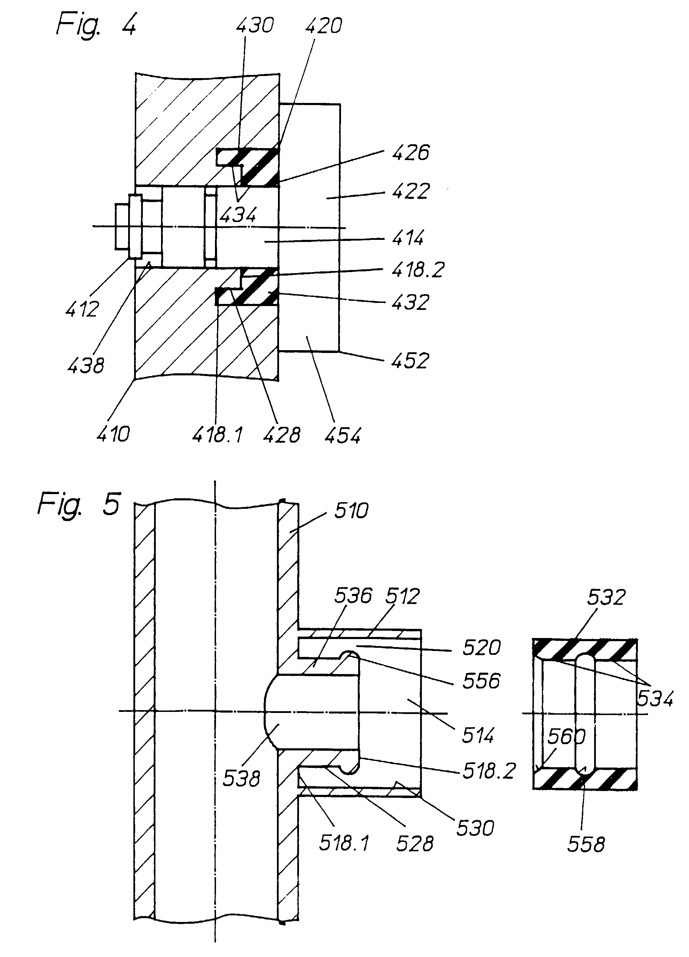

Gemäß Fig. 4 ist in die kreiszylindrische Wandung einer Zuleitung 410 eine Abzweigung 412 integriert, da diese lediglich aus einer radialen Bohrung 414 der Zuleitungswandung besteht. In die Bohrung 414 ist ein Einspritzventil 452 gesteckt, das einen Flansch 454 aufweist, der an der Zuleitung 410 anschlägt, mit der er einen L-förmig profilierten ringförmigen Einbauraum 420 begrenzt, den ein ebenso profiliertes Dichtungselement 432 ausfüllt, das eine rechtwinklig gestufte, radial innere Dichtfläche 434 aufweist, deren kreiszylindrischer Abschnitt mit größerem Durchmesser auf einer kreiszylindrischen zusätzlichen Ringfläche 428 sitzt, die den Einbauraum 420 radial innen mitbegrenzt.

Gemäß Fig. 5 kann die Ausführungsform gemäß Fig. 2 dahingehend abgeändert werden, daß an das freie Ende des Innenstutzens 536 ein Außenwulst 556 angeformt wird, der als radiale Erhebung formschlüssig in eine innere Ringnut 558 als radiale Vertiefung eines Dichtungselementes 532 eingreift, das im übrigen kreiszylindrisch geformt ist, aber an seinem der Zuleitung 510 zugewandten Ende innen eine konische Fase 560 aufweist, die das Aufstecken des Dichtungselementes 532 auf den Innenstutzen 536 über den Außenwulst 356 hinweg erleichtert, auf welchen die Wandung der Ringnut 558 schnappt.

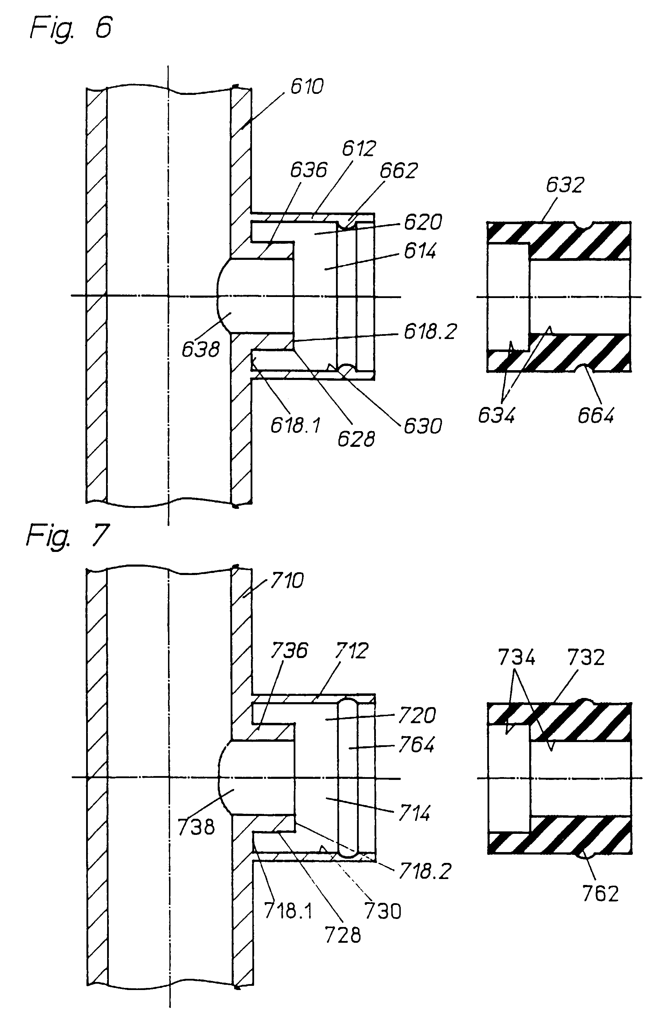

Gemäß Fig. 6 kann die Ausführungsform gemäß Fig. 2 wahlweise oder zusätzlich zu der Änderung gemäß Fig. 5 dahingehend geändert werden, daß einerseits das gerade Profil der radial inneren Ringfläche 630 der Abzweigung 612 der Zuleitung 610 eine kreisbogenförmige Erhebung 662 und andererseits das Dichtungselement 632 eine entsprechende umlaufende Vertiefung 664 erhält; in diese Vertiefung schnappt die Erhebung 662 ein, wenn das Dichtungselement 632 in die Abzweigung 612 und anschließend auf den Innenstutzen 636 bis zum Anschlag an der Zuleitung 610 gesteckt wird.

Gemäß Fig. 7 kann die Ausführungsform gemäß Fig. 6 dadurch abgewandelt werden, daß die Erhebung 762 und die Vertiefung 764 ihre Plätze tauschen und sich nun am Dichtungselement bzw. an der Abzweigung 712 befinden.

## Patentansprüche

1. Dichtungsanordnung für den Anschluß eines Ventils zur kraftstoffeinspritzung in Verbrennungsmotoren an eine Kraftstoffzuleitung (110), insbesondere Verteilerleitung für mehrere Einspritzventile; mit einem ringförmigen, elastomeren Dichtungselement (132), das in einem vom Ventil und einer Abzweigung (112, 116) der Leitung (110), oder dieser selbst, gemeinsam gebildeten Einbauraum (120) angeordnet ist und dabei einerseits an einer radial äußeren Ringfläche (126) des axial durchbohrten Ventilgehäuses (122) anliegt sowie andererseits an der koaxialen, radial inneren Ringfläche (130) der Abzweigung (112) oder Leitung (110) unter radialer Vorspannung anliegen soll, dadurch **gekennzeichnet**, daß das Dichtungselement (132) eine axial erstreckte radial innere Dichtfläche (134) aufweist, die auf eine zusätzliche, radial äußere Ringfläche (128) der Abzweigung (112, 116) oder Leitung, oder eines damit verbundenen Teiles (236; 346),übergreift und an dieser den axial begrenzten Einbauraum (120) radial innen mitbegrenzenden Ringfläche (128) dichtend anliegt; und daß sich die radialen Wärmeausdehnungs koeffizienten der unterschiedlichen Materialien des Dichtungselementes (132) einerseits bzw. des Ventilgehäuses (122) und der Abzweigung (112, 116) oder Leitung (110), oder des damit verbundenen Teiles (236; 346) andererseits so zueinander verhalten, daß das Dichtungselement (132) bei Abkühlung sowohl auf die Ringfläche (126) des Ventilgehäuses (122) als auch auf die zusätzliche Ringfläche (128) der Abzweigung (112, 116) oder Leitung, oder des damit verbundenen Teiles (236; 346) schrumpft.

2. Dichtungsanordnung nach Anspruch 1, dadurch gekennzeichnet, daß die Profile des ringförmigen Einbauraumes (120) bzw. des Dichtungselementes (132) im wesentlichen rechteckig sind.

3. Dichtungsanordnung nach Anspruch 1, dadurch gekennzeichnet, daß die Profile des ringförmigen Einbauraumes (220) bzw. des Dichtungselementes (232) im wesentlichen L-förmig und gegebenenfalls axial länger als radial dick sind.

4. Dichtungsanordnung nach Anspruch 2 oder 3, dadurch gekennzeichnet, daß das Profil des Dichtungselementes (632; 732) radial innen oder außen eine Vertiefung (664; 764) oder Erhebung (662; 762) für den formschlüssigen Eingriff der Wandung der Abzweigung (612; 712) oder Leitung (610; 710) bzw. in diese aufweist.

5. Dichtungsanordnung nach Anspruch 1, dadurch gekennzeichnet, daß das, das Ventilgehäuse (222) aufnehmende zylindrische Ende der Abzweigung (212) oder Leitung einen koaxialen Innenstutzen (236) aufweist, dessen radiale Außenfläche die zusätzliche Ringfläche (228) bildet.

6. Dichtungsanordnung nach Anspruch 5, dadurch gekennzeichnet, daß der Innenstutzen (536) an seinem freien Ende einen radialen Außenwulst (556) für den formschlüssigen Eingriff in eine radial innere Ringnut (558) des Dichtungselementes (532) aufweist.

7. Dichtungsanordnung nach Anspruch 3, dadurch gekennzeichnet, daß der Einbauraum (420) an der Abzweigstelle vollständig in der Wandung der Leitung (410) liegt.

8. Dichtungsanordnung nach Anspruch 1, für ein Einspritzventil, dessen an die Kraftstoffzuleitung (310) oder deren Abzweigung (312) anzuschließendes Gehäuseende eine radial äußere Ringnut (344) mit der Geqenfläche (326) für den Sitz des Dichtungselementes (332) aufweist, dadurch **gekennzeichnet** daß das Profil des Dichtungselementes (332) im wesentlichen ein Rechteck ist mit radial innerer, axial mittiger Ringnut (350) zur Aufnahme zweier einander axial gegenüberstehender Flansche (340 und 348) zur axialen Begrenzung der Ringnut (349) des Ventilgehäuses (322) bzw. am freien Ende eines axial durchbohrten Adapters (346), der mit der Wandung der Leitung (310) kommuniziert und die zusätzliche Gegenfläche (328) zur Anlage der zusätzlichen Dichtfläche (335) des Dichtungselementes (322) bildet.

## Claims

1. Sealing system for connecting a fuel injection valve in a combustion engine to a fuel rail (110), in particular a distributor for several injection valves; having a ring-shaped elastomer sealing element (132) which is located in an installation space (120) formed by the valve and a branch (112, 116) of the rail (110) or the rail itself altogether, whereby said element on the one hand fits to a radial outer ring surface (126) of the axially pierced valve housing (122) as well as on the other hand shall fit under radial prestress to the coaxial, radial inner ring surface (130) of the branch (112) or rail (110), **characterized** in that the sealing element (132) has an axially extending radial inner sealing surface (134) which reaches over an additional radial outer ring surface (128) of the branch (112, 116) or rail or a therewith connected part (236, 346) and which fits with sealing effect to this ring surface (128) which additionally limits radially inside the axially limited installation space (120); a n d in that the radial thermal expansion coefficients of the different materials of the sealing element (132) on the one hand, and of the valve housing (122) and the branch (112, 116) or rail (110), or the therewith connected part (236; 346) on the other hand, behave to each other in such a way that the sealing element (132) when it cools down shrinks onto both the ring surface (126) of the valve housing (122) as well as onto the additional ring surface (128) of the branch (112, 116) or rail or the therewith connected part (236; 346).

2. Sealing system as set forth in claim 1, in which the profiles of the ring-shaped installation space (120) respectively of the sealing element (132) are basically rectangular.

3. Sealing system as set forth in claim 1, in which the profiles of the ring-shaped installation space (220) respectively of the sealing element (232) are basically L-shaped and may be axially longer than radially thick.

4. Sealing system as set forth in claims 2 or 3, in which the profile of the sealing element (623; 732) radially inside or outside is provided with a depression (664; 764) or elevation (662; 762) for the form-closed grip of or into the wall of the branch (612; 712) or rail (610; 710).

5. Sealing system as set forth in claim 1, in which the cylindrical end of the branch (212) or rail which includes the valve housing (222) has a coaxial interior socket (236) the radial external surface of which forms the additional ring surface (228).

6. Sealing system as set forth in claim 5, in which the interior socket (536) at its free end has a radial external bead (556) for the form-closed grip into a radial inner ring groove (558) of the sealing element (532).

7. Sealing system as set forth in claim 3, in which the installation space (420) at the branch-off point is completely contained in the wall of the rail (410).

8. Sealing system as set forth in claim 1 for an injection valve which at its housing end to be connected to the fuel rail (310) or to its branch (312) is provided with a radial external ring groove (344) with opposite surface (326) for the seat of the sealing element (332), characterized in that the profile of the sealing element (332) is basically a rectangle with a radial interior axially centric ring groove (350) to include two axially opposed flanges (340 and 348) for axial limitation of the ring groove (344) of the valve housing (322) respectively at the free end of an axially pierced adaptor (346) which communicates with the wall of the fuel rail (310) and forms the additional opposite surface (328) for contacting the additional sealing surface (335) of the sealing element (332).

## Revendications

1. Système d'étanchéité pour le raccordement d'une soupape pour l'injection de carburant dans des moteurs à combustion à un conduit d'alimentation de carburant (110), notamment un conduit de distribution pour plusieurs soupapes injectrices, avec un élément d'étanchéité annulaire élastomère (132) placé dans un espace d'installation (120) formé par la soupape et par un branchement (112, 116) du conduit (110) ou par le dernier même, et qui en même temps se colle d'une part à une surface annulaire (126) radiale extérieure de la cage (122) de soupape percée axialement et doit se coller d'autre part, sous précontrainte radiale, à la surface annulaire (130) coaxiale radiale intérieure du branchement (112) ou du conduit (110),
**caractérisé** en ce que l'élément d'étanchéité (132) possède une surface d'étanchéité (134) radiale intérieure s'étendant axialement qui rejoint une surface annulaire (128) radiale extérieure supplémentaire du branchement (112, 116) ou du conduit ou d'une pièce y connectée (236; 346) et qui se colle de façon étanche à cette surface annulaire (128) qui à l'intérieur limite supplémentairement radialement l'espace d'installation (120) axialement limité, et en ce que les coefficients de dilatation thermique radiale des différents matériaux de l'élément d'étanchéité (132) d'une part respectivement de la cage de soupape (122) et du branchement (112, 116) ou du conduit (110) ou de la pièce y connectée (236; 346) d'autre part réagissent de façon que l'élément d'étanchéité (132) se resserre pendant le refroidissement et sur la surface annulaire (126) de la cage de soupape (122) et sur la surface annulaire supplémentaire (128) du branchement (112, 116) ou du conduit ou de la pièce y connectée (236; 346).

2. Système d'étanchéité suivant la revendication 1,
caractérisé en ce que les profils de l'espace annulaire d'installation (120) respectivement de l'élément d'étanchéité (132) sont essentiellement rectangulaires.

3. Système d'étanchéité suivant la revendication 1,
caractérisé en ce que les profils de l'espace annulaire d'installation (220) respectivement de l'élément d'étanchéité (232) sont essentiellement en L et, le cas échéant, sont axialement plus longs que radialement épais.

4. Système d'étanchéité suivant l'une des revendications 2 ou 3, caractérisé en ce que le profil de l'élément d'étanchéité (632; 732) possède radialement à l'intérieur ou à l'extérieur un creusement (664; 764) ou une élévation (662; 762) pour l'engagement positif de la paroi du branchement (612; 712) ou du conduit (610; 710) respectivement dans celle-ci.

5. Système d'étanchéité suivant la revendication 1,
caractérisé en ce que le bout cylindrique du branchement (212) ou du conduit qui contient la cage de soupape (222) est muni d'une tubulure intérieure coaxiale (236) dont la surface extérieure radiale constitue la surface annulaire supplémentaire (228).

6. Système d'étanchéité suivant la revendication 5,
caractérisé en ce que la tubulure intérieure (536) à son bout libre est munie d'un bourrelet extérieur radial (556) pour l'engagement positif dans une rainure annulaire intérieure radiale (558) de l'élément d'étanchéité (532).

7. Système d'étanchéité suivant la revendication 3,
caractérisé en ce que l'espace d'installation (420) au point de branchement est complètement incorporé dans la paroi du conduit (410).

8. Système d'étanchéité suivant la revendication 1 pour une soupape injectrice dont le bout de la cage qui est à brancher sur le conduit de carburant (310) ou sur le branchement (312) du dernier possède une rainure annulaire extérieure radiale (344) avec une contre-surface (326) pour le logement de l'élément d'étanchéité (332), caractérisé en ce que le profil de l'élément d'étanchéité (332) est essentiellement rectangulaire avec une rainure annulaire (350) radiale intérieure centré axialement pour le logement de deux brides (340 et 348) axialement opposées pour la limitation de la rainure annulaire (344) de la cage de soupape (322) respectivement au bout libre d'un adaptateur (346) axialement percé qui communique avec la paroi du conduit (310) et qui constitue la contre-surface supplémentaire (328) pour le contact de la surface d'étanchéité supplémentaire (335) de l'élément d'étanchéité (332).
